**Europäisches Patentamt**

**European Patent Office**

**Office européen des brevets**

(19)

(11) **EP 1 592 254 A1**

(12) # EUROPEAN PATENT APPLICATION

(43) Date of publication:
**02.11.2005 Bulletin 2005/44**

(51) Int Cl.⁷: **H04N 7/26**, H04N 7/36

(21) Application number: **04010293.1**

(22) Date of filing: **30.04.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Landsiedel, Thilo**<br> **63110 Rodgau (DE)**<br>• **Werner, Lothar**<br> **63110 Rodgau (DE)** |
| (71) Applicant: **MATSUSHITA ELECTRIC INDUSTRIAL CO., LTD.**<br>**Kadoma-shi, Osaka 571-8501 (JP)** | (74) Representative: **Grünecker, Kinkeldey, Stockmair & Schwanhäusser Anwaltssozietät**<br>**Maximilianstrasse 58**<br>**80538 München (DE)** |

(54) **Film mode extrapolation**

(57)      The present invention enables an improved film mode determination, in particular for border areas of moving objects. This is achieved by a film mode extrapolation. The film mode indication of the current block is extrapolated in accordance with a motion vector determined for the identical block. In this manner, the accuracy of the film mode determinations for the current image can be improved and image processing yielding improved picture quality can be improved accordingly.

Fig.6

**Description**

The present invention relates to an improved film mode determination. In particular, the present invention relates to a method for determining improved film mode determinations and to a corresponding film mode detector.

Film mode indications are employed in motion compensated image processing which is used in an increasing number of applications, in particular in digital signal processing of modern television receivers. Specifically, modern television receivers perform a frame-rate conversion, especially in the form of a up-conversion or a motion compensated up-conversion, for increasing the picture quality of the reproduced images. Motion compensated up-conversion is performed, for instance, for video sequences having a field or frame frequency of 50 Hz to higher frequencies like 60 Hz, 66.67 Hz, 75 Hz, 100 Hz, etc. While a 50 Hz input signal frequency mainly applies to television signals broadcast based on PAL or SECAM standards, NTSC based video signals have an input frequency of 60 Hz. A 60 Hz input video signal may be up-converted to higher frequencies like 75 Hz, 80 Hz, 90 Hz, 120 Hz, etc.

During up-conversion, intermediate images are to be generated which reflect the video content at temporal positions which are not represented in the 50 Hz or 60 Hz input video sequence. For this purpose, the motion of objects has to be taken into account in order to appropriately reflect the changes between subsequent images caused by the motion of objects. The motion of objects is calculated on a block basis, and motion compensation is performed based on the relative position and time of the newly generated image between the previous and subsequent images.

For motion vector determination, each image is divided into a plurality of blocks. Each block is subjected to motion estimation in order to detect a shift of an object from the previous image.

In contrast to interlaced video signals like PAL or NTSC signals, motion picture data is composed of complete frames. The most widespread frame rate of motion picture data is 24 Hz (24p). When converting motion picture data into an interlaced video sequence for display on a television receiver (this conversion is called telecine), the 24 Hz frame rate is converted by employing a "pull down" technique.

For converting motion picture film into an interlaced signal according to the PAL standard with a field rate of 50 Hz (50i), a 2-2 pull down technique is employed. The 2-2 pull down technique generates two fields out of each film frame. The motion picture film is played at 25 frames per second (25p). Consequently, two succeeding fields contain information originating from the same frame and representing the identical temporal position of the video content, in particular of moving objects.

When converting motion picture film into a standard NTSC signal having a field rate of 60 Hz (60i), the frame rate of 24 Hz is converted into a 60 Hz field rate employing a 3-2 pull down technique. This 3-2 pull down technique generates two video fields from a given motion picture frame and three video fields from the next motion picture frame.

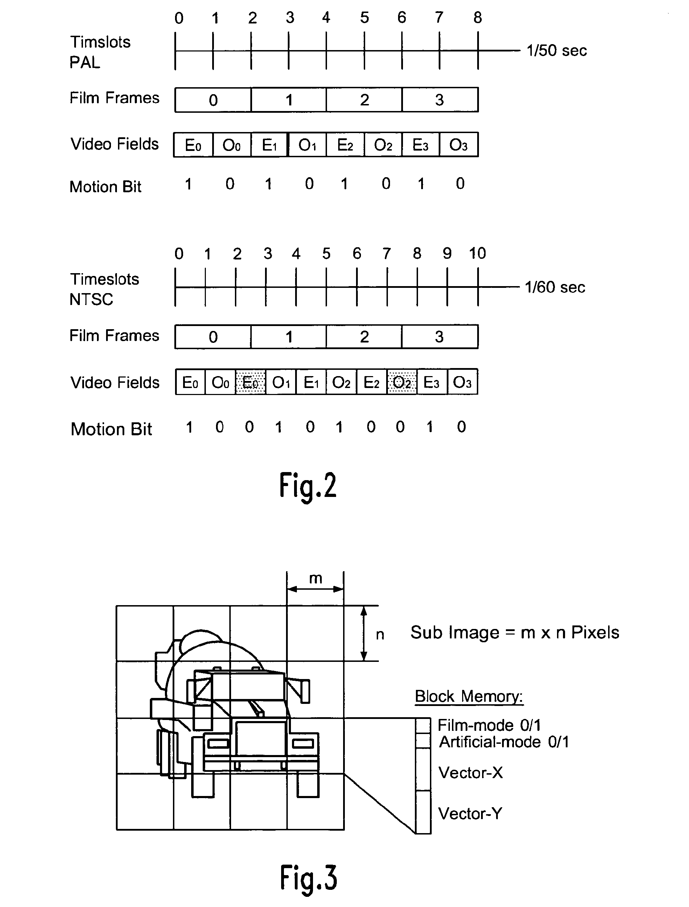

The telecine conversion process for generating interlaced video sequences in accordance with different television standards is illustrated in Fig. 2. The employed pull down techniques result in video sequences which include pairs or triplets of adjacent fields reflecting an identical motion phase. A field difference for motion detection can only be calculated between fields which stem from different film frames.

The detection of the individual pull down pattern employed is required in order to appropriately perform a picture quality improvement processing, in particular to decide whether or not a film motion compensation is to be employed. A detection of a respective pull down pattern is already known, for instance, from EP-A-0 720 366 and EP-A-1 198 138.

The present invention aims to further improve film mode detection and to provide an improved method of film mode detection and an improved film mode detector.

This is achieved by the features of the independent claims.

According to a first aspect of the present invention, a method for determining film mode indications for a plurality of image areas of a current image is provided. The current image is part of an image sequence. The method receives a film mode indication for current image area and obtains a motion vector for the current image area. Based on the received motion vector, film mode indications of the current image are corrected.

According to a further aspect of the present invention, a film mode detector for determining film mode indications for a plurality of image areas of a current image is provided. The current image is part of an image sequence. The film mode detector comprises input means and extrapolation means. The input means obtains a film mode indication and a motion vector for a current image area. The extrapolation means corrects film mode indications of the current image based on the obtained motion vector.

It is the particular approach of the present invention to improve film mode detection by obtaining film mode indications on a local basis and to extrapolate the film mode indication of a current image area to neighbouring image areas in accordance with a motion vector determined for the current image area. In this manner, the accuracy and reliability of film mode indications around leading edges of moving objects can be increased. The image quality achievable by picture improvement algorithms is accordingly enhanced.

Conventionally, the correct film mode indication is only detected if a moving object covers most of the respective image area. Thus, the correct film mode indication is not detected if the moving object only covers a smaller proportion of an image area. In accordance with the present invention, the film mode indications of image areas including a leading edge of a moving object can be converted into the correct mode.

Further, film mode indications of image areas around a leading edge of a moving object generally do not switch immediately to a newly detected mode due to a delay which is introduce in order to increase the reliability of the film mode indications. However, this is only achieved at the expense of a correct determination of a film mode determination for leading edges of moving objects. This drawback is avoided by employing a film mode indication extrapolation in accordance with the present invention.

Preferably, image areas located between the current image area and an image area pointed to by the motion vector are set to film mode if the film mode indication received for the current image area is film mode. Accordingly, film mode is extrapolated in accordance with the motion vector determined for the current image area.

Preferably, the extrapolation is only performed if the target block, i.e. the block pointed to by the motion vector, is not in film mode. Accordingly, an extrapolation is only performed if the motion vector points to image areas of another mode which is different from that of the current image area.

If the motion vector points from the current image area to a position outside of the current image, the motion vector length is preferably clipped such that the clipped vector only points to a position located within the current image.

Preferably, the images of the image sequence are divided into a plurality of blocks wherein the film mode indications and motion vectors are provided on a block basis, i.e. the image areas correspond to the block structure. Accordingly, the extrapolation can be performed in a simple manner based on an existing image area structure.

Preferably, the motion vector pointing from a current block into a target block is quantized in order to fit into the raster of image blocks. Accordingly, the film mode extrapolation can be implemented in a simple manner.

The image areas to be set to film mode when performing film mode extrapolation, are preferably selected in accordance with a predefined image area pattern, i.e. a pattern which identifies the individual image areas to be corrected. In this manner, those image areas for which the film mode indication needs to be corrected can be determined in a reliable and simple manner.

The predefined pattern is preferably selected from a plurality of prestored patterns in a memory. This selection is performed based on the relative positions of the current image area and the target image area. Accordingly, a pattern to be applied to a current image area can be selected in a fast and simple manner.

Preferably, the prestored patterns provide all possible combinations of relative positions of the current image area and the target image area. The image areas for which the film mode indication is to be corrected can thus be determined in a reliable manner.

According to a preferred embodiment, the image areas to be set to film mode are determined based on an iterative determination starting at the current image area and stepwisely approaching the target image area.

The step size for determining new image areas to be set to film mode is preferably determined based on the motion vector's orientation. Most preferably, the step size is set by dividing the larger vector component by the smaller vector component of the horizontal and vertical vector components.

Preferably, an additional indication is stored in connection with each of the image areas indicating whether or not the film mode indication of a current image area has been corrected. In this manner, an original film mode indication can be distinguished from a corrected film indication in a reliable manner. A further extrapolation of film mode indications can be inhibited when the occurrence of a "corrected" film mode indication is detected. In this manner, a once extrapolated film mode does not serve as a basis for a further film mode extrapolation.

According to a preferred embodiment, image areas between a current image area and a target image area are set to video mode if the current image area is in video mode. In this manner, the film mode indications of a moving object in video mode inserted into an environment in film mode can be accurately determined by extrapolating a video mode accordingly.

Preferably, the video mode is only extrapolated if the target image area is in film mode.

Preferred embodiments of the present invention are the subject matter of dependent claims.

Other embodiments and advantages of the present invention will become more apparent from the following description of the preferred embodiments, in which:

Fig. 1    illustrates an example of a division of a video image into a plurality of blocks of a uniform size,

Fig. 2    illustrates pull down schemes for converting motion picture data into a PAL or NTSC interlaced video sequence,

Fig. 3    illustrates an example for a video image divided into a plurality of blocks and the auxiliary information stored, with respect to each of the blocks,

Fig. 4    illustrates the determination of film mode for a moving object in a video mode background having a film mode delay at the leading edge of the moving object,

Fig. 5    illustrates an example for an improved film mode detection in accordance with the present invention,

Fig. 6    illustrates the extrapolation principle of the present invention,

Fig. 7    is a flow chart illustrating the individual steps performed during extrapolation,

Fig. 8    is a flow chart of an iterative block determination,

Fig. 9    illustrates an iterative determination of image blocks for which the film mode indication is to be corrected,

Fig. 10    illustrates a stepwise determination of image blocks for which the film mode indication is to be corrected, and

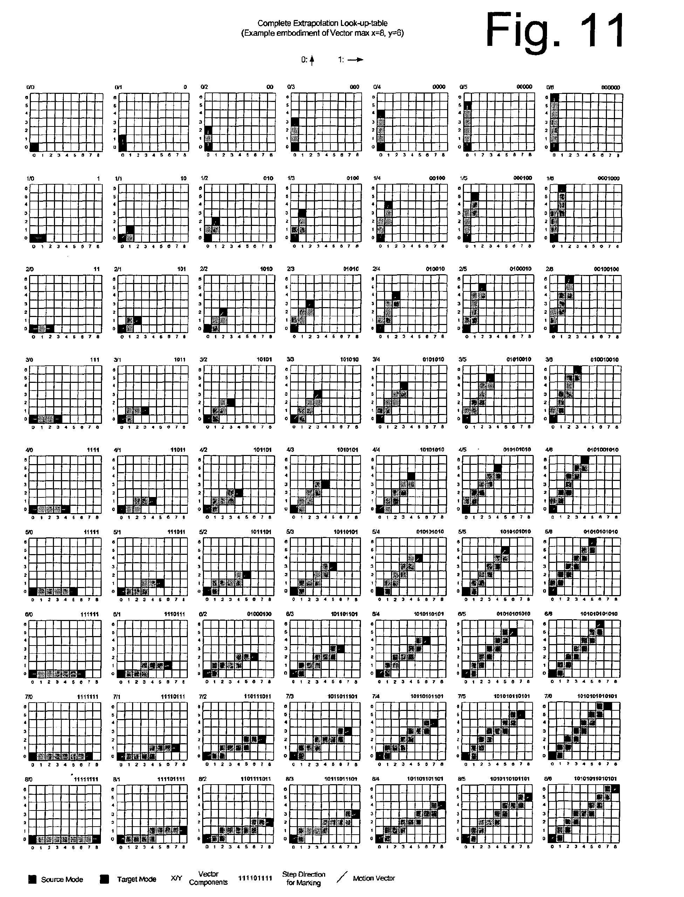

Fig. 11    illustrates an example for an extrapolation look-up-table.

The present invention relates to digital signal processing, especially to digital signal processing in modern television receivers. Modern television receivers employ up-conversion algorithms in order to increase the reproduced picture quality. For this purpose, intermediate images are to be generated from two subsequent images. For generating an intermediate image, the motion of objects has to be taken into account in order to appropriately adapt the object position to the point of time reflected by the compensated image.

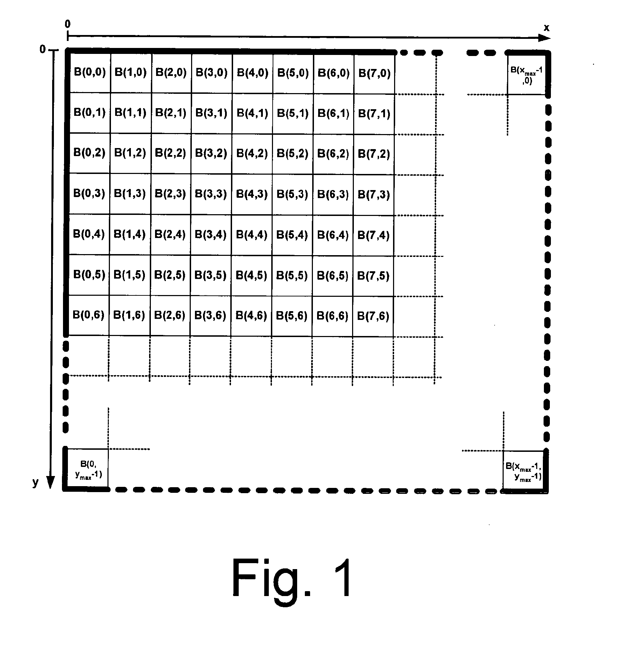

Motion estimation for determining a motion vector and motion compensation are performed on a block basis. For this purpose, each image is divided into a plurality of blocks as illustrated, for example, in Fig. 1. Each block is individually subjected to motion estimation by determining a best matching block in the previous image.

In order to be able to correctly apply motion compensation to an image area, the determination of a film mode indication, i.e. film mode or video mode, for that image area is required. By applying the correct picture quality improvement processing in accordance with the detected film mode indication, image artefacts are avoided.

A video signal processing is particularly required to drive progressive displays and to make use of higher frame rates, in particular for HDTV display devices. The detection of motion picture film converted into interlaced image sequences for television broadcast (further referred to as film mode) is crucial for the signal processing.

For picture improvement processing an interlaced/progressive conversion (I/P) is possible, using an inverse telecine processing, i.e. a re-interleaving of even and odd fields. For image sequences stemming from a 3-2 pull down scheme, the single redundant field from a triplet (the grey colored fields in Fig. 2) is eliminated.

More advanced up-conversion algorithms employ a motion vector based interpolation of frames. The output frame rate can be an uneven fraction of the input video rate, for instance, a 60 Hz input signal frequency may be up-converted to a 72 Hz output frequency corresponding to a ratio of 5:6. Accordingly, only every sixth output frame can be generated from a single input field alone, when a continuous motion impression of moving objects is to be maintained.

The film-mode characteristic of an image may be determined on an image basis or, according to an improved approach, be a local characteristic of individual image areas. In particular, television signals are composed of different types of image areas such as no-motion areas (e.g. logo, background), video camera areas (e.g. newsticker, video insertion) and film mode areas (e.g. main movie, PIP). A pull down scheme detection is separately performed for each of these image areas enabling an up-conversion result with improved picture quality.

Film mode detection generally involves a recognition of a pull down pattern. Conventionally, pixel differences are accumulated to a Displaced Frame Difference (DFD) representing the motion between subsequent images. In order to avoid sudden changes in the detected film-mode indication, which would result in an unstable impression to the viewer, detection delays are employed for triggering a switch from a film mode to a video mode and vice versa.

In order to increase the film mode indication accuracy, a film mode detection is performed on a block basis as illustrated, for instance, in Fig. 3. For each block of a m*n pixel size, a motion vector and film mode indication are determined.

The data obtained for each of the image blocks are illustrated for a single block in Fig. 3. In addition to a horizontal and vertical motion vector component, a film mode indication is stored indicating whether the current block is film mode or video mode. Further, a correction of the assigned film mode indication is indicated by the "artificial mode" indication in order to distinguish an original film mode indication from a later correction thereof.

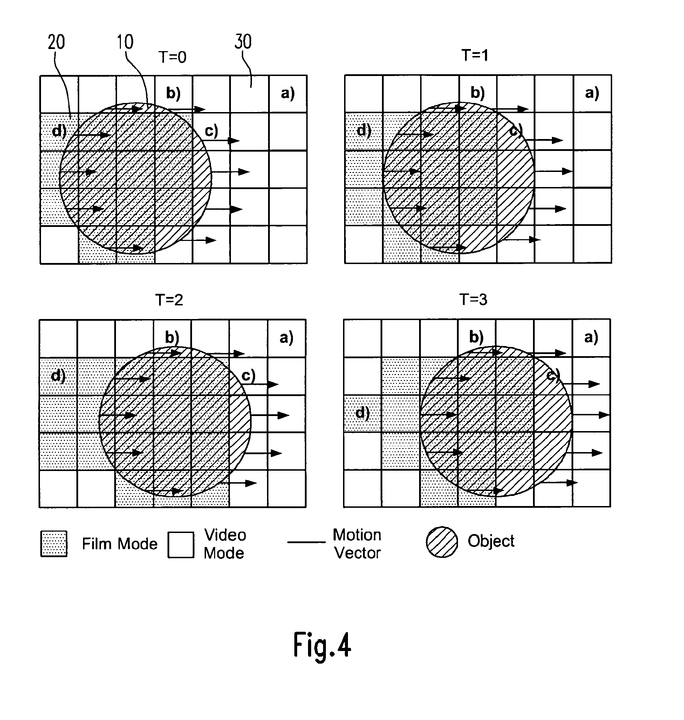

A block based film mode detection and problems arising therefrom are illustrated in Fig. 4. According to an employed default state, all white marked blocks 30 are in video mode (a). When a moving object 10 only covers a small portion of an individual block, the motion value (DFD) does not exceed the predefined threshold and no motion can be detected. The block is considered to be in the video mode (b, c) while a neighboring block 20 belonging to the same moving image object 10, is detected as being in film mode (d).

Further, a switching delay, which is introduced in order to avoid a frequent switch between different modes, causes the leading edge of a moving object 10 not to be properly detected being in film mode as shown in image T=1 of Fig. 4. Although the moving object 10 covers the larger portion of the respective blocks, the block is detected to be video mode (c) irrespective of the moving object 10 being in film mode.

The delay further causes that the trailing edge of the moving object 10 has a trailing image area of film mode blocks (d) although the trailing blocks are not covered by the moving object 10 (see in particular images T=2 and T=3 of Fig. 4). This problem is more severe for moving objects having a small size compared to the size of the image blocks (m*n). Accordingly, the mode delay, i.e. the film delay and video delay, cause a spatial mode offset.

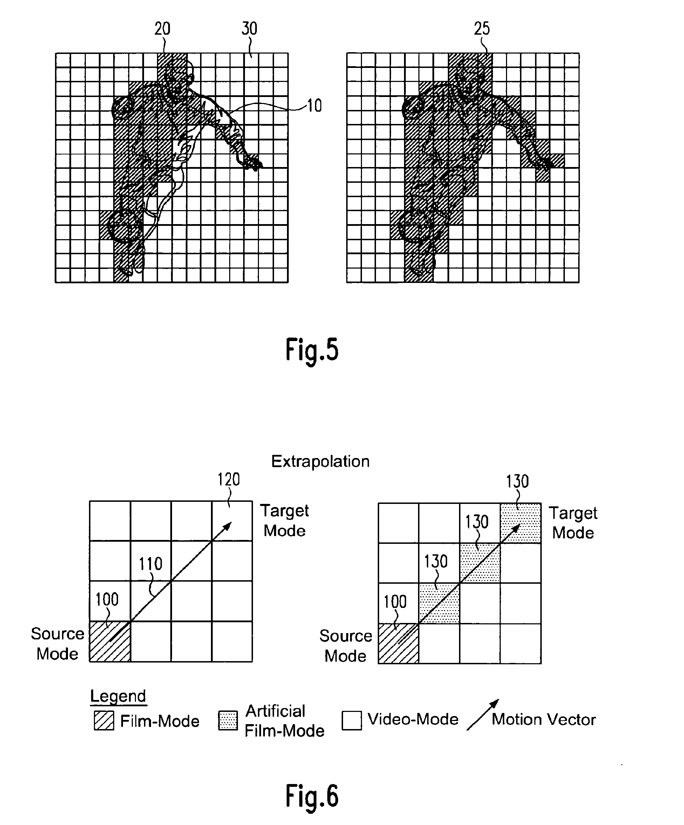

In order to overcome these drawbacks, the present invention employs motion vectors determined for image blocks in order to enable and improve up-conversion processing. The extrapolation of a film mode detection enables to cover leading borders of moving objects. An example of an improved film mode detection in accordance with the present invention is illustrated in Fig. 5.

The left hand image in Fig. 5 illustrates a film mode detection without extrapolation. A moving object 10 in film mode is only partly correctly detected by film mode blocks 20. Especially the leading edge of the moving object 10 is covered by a plurality of incorrectly determined video mode blocks 30. By employing an extrapolation of film mode detection results based on motion vectors, the leading edge of the moving object is covered correctly by additional film mode blocks 25.

For this purpose, the film mode detection of the current block is extrapolated as illustrated in Fig. 6. Motion vector 110 for each film mode block 20 is clipped in order not to point to a position outside of the current image. The mode of the current block 100 is named "source mode", while the mode of the block to which the motion vector 110 of the current block 100 points to is named "target mode". If the motion vector 110 points from a film mode block to a video mode block, all blocks in-between will be set to film mode.

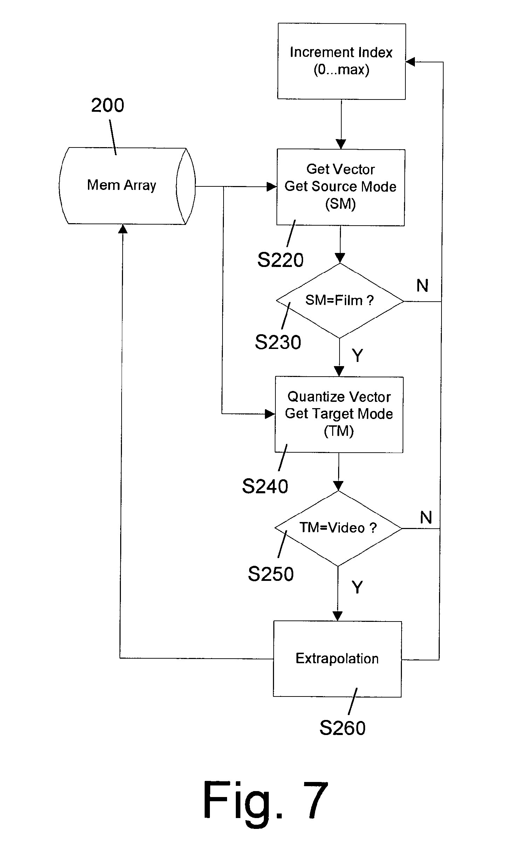

The approach of the present invention to extrapolate film mode indications in accordance with a motion vector 110 will now be described in detail. Each field is divided into a plurality of image areas of blocks as illustrated in Fig. 1. Each block comprises a plurality of pixels, preferably 8*4 pixels for an interlaced video image and 8*8 pixels for a progressive image. Accordingly, 90*60 blocks are provided for each NTSC interlaced video image. Film mode determination and motion estimation is performed for each individual block. The determination results are stored, as illustrated in Fig. 3, for each block separately in a memory area 200 illustrated in Fig. 7. While Fig. 7 depicts the individual steps for extrapolating film mode indications, Fig. 6 illustrates the respective results thereof.

The extrapolation process is started by obtaining the motion vector and source mode for the current block 100 (step S220). If the current block turns out to be film mode in step S230, the motion vector 110 of the current block 100 is quantized in order to fit into the block grid (step S240). If the motion vector points to a position outside of the current image, the motion vector length is clipped in order to point to a respective block at the image border.

After determining the target block 120, i.e. the block to which the motion vector points starting from the current block 100, the mode (target mode) of the target block 120 is determined (step S250). An extrapolation is only performed if the following conditions are met:

$$source\ mode = film\ mode,$$

$$target\ mode = video\ mode.$$

Only if it has been determined in step S250 that the target block is in video mode, extrapolation is performed (step S260). Extrapolation is performed by setting each block 130 under the motion vector 110 pointing from the current block 100 to the target block 120 to film mode.

The determination of the blocks to be set to film mode can be implemented by means of a modulo addressing of the current block index. The motion vector component of the horizontal and vertical components having the larger value is considered as primary axis $V_1$, while the smaller motion component is considered to represent a secondary axis $V_2$. The respective signs determine the directions $Dir_1$, $Dir_2$. The step width for determining stepwisely blocks to be set to film mode is calculated based on an integer division of the larger motion component by the smaller motion vector component as indicated below:

$$V_1 = \left(\left|V_x\right| > \left|V_y\right|\right)? V_X : V_Y \qquad Dir_1 = Sign(V_1) \qquad Step = \frac{\left|V_1\right|}{\left|V_2\right|}$$
$$V_2 = \left(\left|V_x\right| > \left|V_y\right|\right)? V_Y : V_X \qquad Dir_2 = Sign(V_2)$$

It is to be noted that each of these artificially set film mode blocks 130 (in Fig. 6) are marked accordingly, as illustrated in Fig. 3 by an artificial mode bit. Accordingly, each film mode indication can be distinguished to be originally determined or to be artificially set. This artificial mode bit is evaluated before starting the extrapolation process in order to avoid a further extrapolation of those film mode indications which are artificially set.

The source block 100 is not set to artificial mode. The first block set to film mode and having the artificial bit set accordingly is determined in the direction of the sign of the primary axis $V_1$ ($Sign(V_1)$).

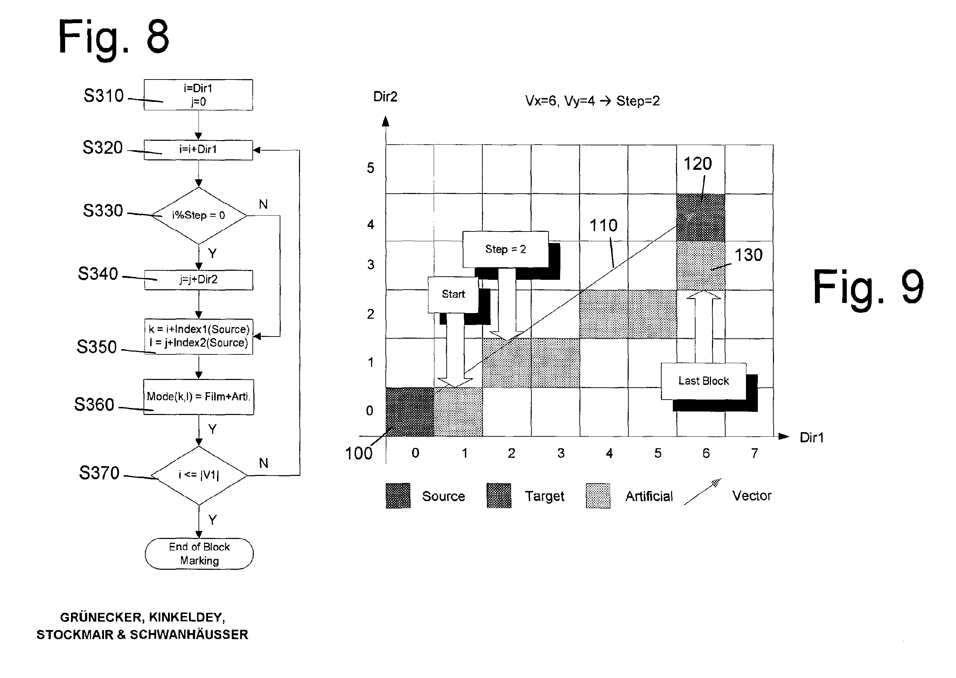

The method for iteratively determining the blocks 130 between the source block 100 and the target block 120 is illustrated in Fig. 8.

For the method of modulo addressing, the typical loop variables i and j are used. The variable i is used for the primary direction Dir1, whereas j is used for Dir2.

The originally determined source block 100 is in film mode and shall not be set again and marked as artificial. Therefore processing starts in step S320 by adding the sign of Dir1 to the index i. This is the block marked "Start" at position 1,0 in Fig. 9.

In step 330 the condition for an increment of the variable j is checked, which is responsible for incrementing the artificial marking position in S340 in the secondary direction Dir2. The condition is true if i equals an even multiple of the value "Step" calculated above. This is marked as "Step=2" in Fig. 9 index position 2,1.

In step S350 the absolute position of the artificial film block is calculated, by means of adding the current indexes i and j to the absolute position of the source block (Index1/2(Source)). The result is held in the variables k and l indicating the position in the image.

Then the artificial bit and film bit are set in step S360, indicated as 130 in Fig. 9.

If the index i of the primary direction Dir1 has advanced to a value equal to the vector magnitude of V1, then modulo addressing ends in S370 ("Last Block" in Fig. 9), else a jump to S320 occurs.

Accordingly, a number of blocks 130 is determined as illustrated by the gray marked blocks in Fig. 9.

The iterative approach for determining the blocks between the current block 100 and the target block 120 has the disadvantage that for some motion vectors, the target block cannot be reached and consequently the target block 120 cannot be approached stepwisely.

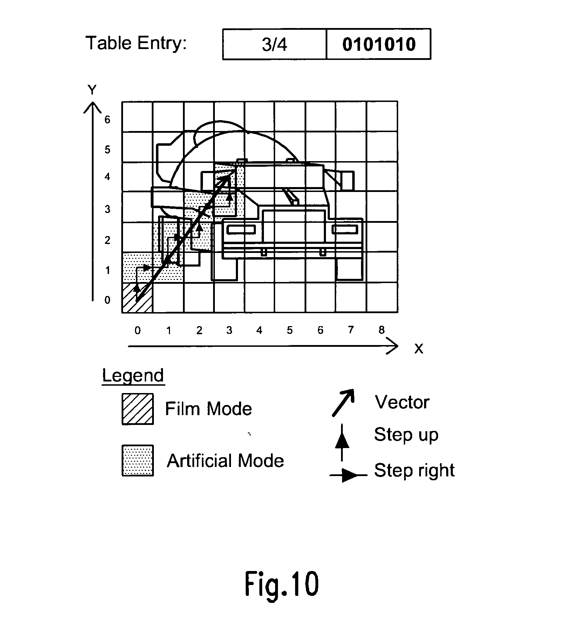

According to another preferred embodiment, the artificial mode marking is implemented by employing a look-up-table (LUT) for every possible combination of x/y vector components. Each entry in the look-up-table identifies those blocks which are to be artificially marked. For this purpose, the stored pattern describes which block is to be marked next. This can be implemented based on a binary indication wherein a "0" indicates up/down step and a "1" indicates right/left step. The moving direction is given by the sign of the respective vector component. The example illustrated in Fig. 10 is based on a motion vector having two positive components x=+3, y=+4. The table entry indicates seven steps of 0101010, i.e. up, right, up, right....

This approach does not allow the marking of blocks in a diagonal manner without having any adjacent blocks in a horizontal or vertical direction. Consequently, the number of blocks marked increases resulting in a better vector path coverage.

The skilled person is aware, that the described approaches for determining those blocks to be artificially set to film mode between a current block and a target block is not limited to the described embodiments and every other approach may be used with the same effect.

The image area is described above to correspond to a block size know from motion estimation. The present invention is not limited to such an image area size for film mode determination and, particularly, for film mode extrapolation. Image areas larger or smaller than a block may be defined. For instance, image areas smaller than a block refine the film mode resolution. A film mode determination and extrapolation may be implemented based on image areas having a size between a whole field and just a single pixel, or even a sub-pixel size.

Further, the film mode extrapolation can be enhanced by an additionally implemented motion vector aided extrapolation of detected video modes of the film mode indication. Under the assumption that a video mode detection for each block can be performed accurately and with high reliability, the motion path of a video mode object does not interfere with that of a film mode object.

Summarizing, the present invention enables an improved film mode determination in particular for border areas of moving objects. This is achieved by a film mode extrapolation. The film mode indication of the current block is extrapolated in accordance with a motion vector determined for the identical block. In this manner, the accuracy of the film mode determinations for the current image can be improved and image processing yielding improved picture quality can be improved accordingly.

**Claims**

1. A method for determining film mode indications for a plurality of image areas of a current image, said current image being part of an image sequence, the method comprising the steps of:

   receiving a film mode indication for a current image area (100),

   obtaining a motion vector (110) for said current image area (100), and

   correcting film mode indications (130) of the current image based on the received motion vector (110).

2. A method according to claim 1, wherein image areas (130) between said current image area (100) and an image area (120) pointed to by said motion vector (110) are set to film mode if said film mode indication received for said current image area (100) is film mode.

3. A method according to claim 2, wherein said image areas (130) are only set to film mode if said film mode indication of said block (120) pointed to by said motion vector (110) is not film mode.

4. A method according to claim 2 or 3, wherein the length of said motion vector (110) is clipped if said motion vector (110) points to a position outside of the current image.

5. A method according to any of claims 1 to 4, wherein said images of said video sequence being divided into a plurality of blocks and said film mode indications and motion vectors (110) are provided on a block basis.

6. A method according to claim 5, wherein said motion vector (110) being quantized to fit into the raster of image blocks.

7. A method according to any of claims 1 to 6, wherein the image areas (130) to be set to film mode are selected in accordance with a predefined image area pattern.

8. A method according to claim 7, wherein said predefined pattern is selected from a plurality of pre-stored patterns in accordance with the relative positions of the current image area (100) and the image area (120) pointed to by said motion vector (110).

9. A method according to claim 8, wherein said pre-stored patterns provide all possible combinations of relative positions of said current image area (100) and said image area (120) pointed to by said motion vector (110).

10. A method according to any of claims 1 to 9, wherein the image areas (130) to be set to film mode are determined based on an iterative determination starting at said current image area (100) and stepwisely approaching said image area (120) pointed to by said motion vector (110).

11. A method according to claim 10, wherein the step size for determining new image areas to be set to film mode is determined based on the motion vector's (110) orientation.

12. A method according to claim 11, wherein said motion vector (110) has a horizontal and vertical component and the step size is calculated by dividing the lager vector component by the smaller vector component.

13. A method according to any of claims 1 to 12, further comprising the step of storing an additional indication in connection with each of said image areas indicating whether or not said film mode indication has been corrected to film mode.

14. A method according to any of claims 1 to 13, wherein said film mode indication indicates either film mode or video mode for each individual image area.

**15.** A method according to claim 13 or 14, wherein a correction of film mode indications is only effected if the film mode indication of the current image area (100) has not been corrected.

**16.** A method according to any of claims 1 to 15, further comprising the step of setting image areas (130) between said current image area (100) and an image area (120) pointed to by said motion vector (110) to video mode if said film mode indication received for said current image area (100) is video mode.

**17.** A method according to claim 16, wherein image areas (130) are only set to video mode if the film mode indication of said image area (120) pointed to by said motion vector (110) is film mode.

**18.** A method for performing a motion compensated image processing comprising the steps of:

receiving motion vectors determined for a current image,

determining film mode indications for the current image,

correcting the film mode indications determined for the current image by applying a method in accordance with any of claims 1 to 17, and

performing motion compensated image processing based on the image data of the current image by applying motion compensation in accordance with the respective film mode indications.

**19.** A film mode detector for determining film mode indications for a plurality of image areas of a current image, said current image being part of an image sequence, comprising:

input means for obtaining a film mode indication and a motion vector (110) for a current image area (100), and

extrapolation means for correcting film mode indications (130) of the current image based on the obtained motion vector (110).

**20.** A film mode detector according to claim 19, wherein said extrapolation means setting image areas (130) between said current image area (100) and an image area (120) pointed to by said motion vector (110) to film mode if said film mode indication received for said current image area (100) is film mode.

**21.** A film mode detector according to claim 20, wherein said extrapolation means being configured to only set said image areas (130) to film mode if said film mode indication of said block (120) pointed to by said motion vector (110) is not film mode.

**22.** A film mode detector according to claim 20 or 21, wherein said extrapolation means being configured to clip the length of said motion vector (110) if said motion vector (110) points to a position outside of the current image.

**23.** A film mode detector according to any of claims 19 to 22, wherein said images of said video sequence being divided into a plurality of blocks and said input means obtaining said film mode indications and motion vectors (110) on a block basis.

**24.** A film mode detector according to claim 23, wherein said extrapolation means quantizing said motion vector (110) to fit into the raster of image blocks.

**25.** A film mode detector according to any of claims 19 to 24, wherein said extrapolation means selecting the image areas (130) to be set to film mode in accordance with a predefined image area pattern.

**26.** A film mode detector according to claim 25, further comprising a memory for storing a plurality of predefined patterns and wherein said extrapolation means selecting said predefined pattern from said plurality of pre-stored patterns in accordance with the relative positions of the current image area (100) and the image area (120) pointed to by said motion vector (110).

**27.** A film mode detector according to claim 26, wherein said memory storing patterns of all possible combinations of relative positions of said current image area (100) and said image area (120) pointed to by said motion vector (110).

28. A film mode detector according to any of claims 19 to 27, wherein said extrapolation means determining the image areas (130) to be set to film mode based on an iterative determination starting at said current image area (100) and stepwisely approaching said image area (120) pointed to by said motion vector (110).

29. A film mode detector according to claim 28, wherein said extrapolation means setting the step size for determining new image areas to be set to film mode based on the motion vector's (110) orientation.

30. A film mode detector according to claim 29, wherein said motion vector (110) has a horizontal and vertical component and said extrapolation means calculating the step size by dividing the lager vector component by the smaller vector component.

31. A film mode detector according to any of claims 19 to 30, wherein said extrapolation means storing an additional indication in connection with each of said image areas indicating whether or not said film mode indication has been corrected to film mode.

32. A film mode detector according to any of claims 19 to 31, wherein said film mode indication indicates either film mode or video mode for each individual image area.

33. A film mode detector according to claim 31 or 32, wherein said extrapolation only effects a correction of film mode indications if the film mode indication of the current image area (100) has not been corrected.

34. A film mode detector according to any of claims 19 to 33, wherein said extrapolation means further setting image areas (130) between said current image area (100) and an image area (120) pointed to by said motion vector (110) to video mode if said film mode indication received for said current image area (100) is video mode.

35. A film mode detector according to claim 34, wherein said extrapolation means only sets image areas (130) to video mode if the film mode indication of said block (120) pointed to by said motion vector (110) is film mode.

36. A motion compensator for processing an input image sequence in accordance with a field of motion vectors and film mode indications for each image, comprising:

   a film mode detector in accordance with any of claims 19 to 35 for determining extrapolated film mode indications for the image areas of each image, and

   a selector for selecting motion compensation for each individual image area in accordance with the respective film mode indication.

Fig. 1

**Fig.2**

Sub Image = m x n Pixels

Block Memory:

Film-mode 0/1
Artificial-mode 0/1

Vector-X

Vector-Y

**Fig.3**

EP 1 592 254 A1

Fig.4

**Fig.5**

Extrapolation

Legend

Film-Mode · Artificial Film-Mode · Video-Mode · Motion Vector

**Fig.6**

200

Increment Index
(0...max)

Mem Array

Get Vector
Get Source Mode
(SM)

S220

SM=Film ?    N

S230

Y

Quantize Vector
Get Target Mode
(TM)

S240

TM=Video ?    N

S250

Y

Extrapolation

S260

# Fig. 7

# Fig. 8

- S310 — i=Dir1; j=0
- S320 — i=i+Dir1
- S330 — i%Step = 0 (N / Y)
- S340 — j=j+Dir2
- S350 — k = i+Index1(Source); l = j+Index2(Source)
- S360 — Mode(k,l) = Film+Arti.
- S370 — i <= |V1| (N / Y)
- End of Block Marking

GRÜNECKER, KINKELDEY,
STOCKMAIR & SCHWANHÄUSSER

# Fig. 9

Vx=6, Vy=4 → Step=2

Step = 2
Start
Last Block
120
110
130

Source    Target    Artificial    Vector

Table Entry: | 3/4 | **0101010**

**Legend**

▨ Film Mode

⬚ Artificial Mode

↗ Vector

↑ Step up

→ Step right

# Fig.10

# Fig. 11

Complete Extrapolation Look-up-table
(Example embodiment of Vector max x=8, y=6)

0: ↑    1: →

Source Mode ■    Target Mode ■    X/Y  Vector Components    111101111  Step Direction for Marking  /  Motion Vector

## EUROPEAN SEARCH REPORT

**European Patent Office**

Application Number

EP 04 01 0293

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 291 280 A (XU DONG ET AL) 1 March 1994 (1994-03-01)<br><br>* column 8, line 10 - column 12, line 9 *<br>* figures 8-10 * | 1,5,7, 14,18, 19,23, 25,32,36 | H04N7/26 H04N7/36 |
| A | | 2-4,6, 8-12,16, 17, 20-22, 24, 26-30, 34,35 | |
| X | EP 1 021 040 A (WILSONVILLE IND PARK) 19 July 2000 (2000-07-19)<br><br>* paragraphs '0008! - '0016! * | 1,5,14, 18,19, 23,32,36 | |
| A | | 2-4, 6-12,16, 17, 20-22, 24-30, 34,35 | **TECHNICAL FIELDS SEARCHED** (Int.Cl.7)<br><br>H04N |
| X | EP 0 994 626 A (ST MICROELECTRONICS SRL) 19 April 2000 (2000-04-19)<br><br>* paragraphs '0061!, '0075! - '0097! *<br>* figures 6,9,10 * | 1,5,14, 18,19, 23,32,36 | |
| A | | 2-4, 6-12,16, 17, 20-22, 24-30, 34,35 | |

-/--

The present search report has been drawn up for all claims

| Place of search | Date of completion of the search | Examiner |
|---|---|---|
| The Hague | 6 December 2004 | Lombardi, G |

**European Patent Office**

**EUROPEAN SEARCH REPORT**

Application Number

EP 04 01 0293

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 198 138 A (MATSUSHITA ELECTRIC IND CO LTD) 17 April 2002 (2002-04-17)<br><br>* paragraphs '0032! - '0067! *<br>* figure 4 * | 1-12,14, 16-30, 32,34-36 | |
| A | US 2001/026328 A1 (DEL CORSON SANDRA) 4 October 2001 (2001-10-04)<br><br>* paragraphs '0031!, '0051! - '0060! * | 1-12,14, 16-30, 32,34-36 | |
| A | PEKER K A ET AL: "Automatic measurement of intensity of motion activity of video segments" PROCEEDINGS OF THE SPIE, SPIE, BELLINGHAM, VA, US, vol. 4315, 24 January 2001 (2001-01-24), pages 341-351, XP001176760 ISSN: 0277-786X<br>* page 345 - page 347, paragraph 3 * | 1-12,14, 16-30, 32,34-36 | |
| A | WO 02/056597 A (KONINKL PHILIPS ELECTRONICS NV) 18 July 2002 (2002-07-18)<br><br>* page 12, line 1 - page 14, line 13 * | 1-12,14, 16-30, 32,34-36 | TECHNICAL FIELDS SEARCHED (Int.Cl.7) |

The present search report has been drawn up for all claims

| Place of search | Date of completion of the search | Examiner |
|---|---|---|
| The Hague | 6 December 2004 | Lombardi, G |

EPO FORM 1503 03.82 (P04C01)

European Patent

Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-12,14,16-30,32,34-36

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

Application Number

EP 04 01 0293

The Search Division considers that the present European patent application does not comply with the requirements of unity of invention and relates to several inventions or groups of inventions, namely:

1. claims: 1-6,10-12,14,16-24,28-30,32,34-36

    Method for film mode indication correction for image areas with correction applied on areas between a current area and an area pointed by a motion vector having origin in current area.
    ---

2. claims: 1,7-9,19,25-27

    Method for film mode indication correction for image areas with correction applied on areas selected in accordance with a predefined area pattern.
    ---

3. claims: 1,13,15,19,31,33

    Method for film mode indication correction for image areas with storage for each area of information related to the application or not of correction.
    ---

**EP 1 592 254 A1**

**ANNEX TO THE EUROPEAN SEARCH REPORT**
**ON EUROPEAN PATENT APPLICATION NO.**

EP 04 01 0293

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2004

| Patent document cited in search report | | Publication date | Patent family member(s) | | Publication date |
|---|---|---|---|---|---|
| US 5291280 | A | 01-03-1994 | NONE | | |
| EP 1021040 | A | 19-07-2000 | EP | 1021040 A2 | 19-07-2000 |
| | | | JP | 2000217104 A | 04-08-2000 |
| EP 0994626 | A | 19-04-2000 | EP | 0994626 A1 | 19-04-2000 |
| | | | JP | 2000125303 A | 28-04-2000 |
| | | | US | 6549668 B1 | 15-04-2003 |
| EP 1198138 | A | 17-04-2002 | EP | 1198138 A1 | 17-04-2002 |
| US 2001026328 | A1 | 04-10-2001 | WO | 0165857 A1 | 07-09-2001 |
| | | | EP | 1183873 A1 | 06-03-2002 |
| | | | JP | 2003525548 T | 26-08-2003 |
| WO 02056597 | A | 18-07-2002 | CN | 1456015 T | 12-11-2003 |
| | | | EP | 1352528 A1 | 15-10-2003 |
| | | | WO | 02056597 A1 | 18-07-2002 |
| | | | JP | 2004518341 T | 17-06-2004 |
| | | | US | 2002131499 A1 | 19-09-2002 |

EPO FORM P0459

For more details about this annex : see Official Journal of the European Patent Office, No. 12/82

22